# EUROPEAN PATENT SPECIFICATION

(11) **EP 2 861 662 B1**
(45) Date of publication and mention of the grant of the patent: **25.09.2019**
(21) Application number: 12879415.3
(22) Date of filing: 19.06.2012
(51) Int. Cl.: C08L 9/00, C08K 5/18, C08L 23/16, C08L 23/28

(54) **THERMOPLASTIC ELASTOMER COMPOSITION AND PROCESS TO PRODUCE SAME**
WÄRMEHÄRTENDE ELASTOMERZUSAMMENSETZUNG UND VERFAHREN ZUR HERSTELLUNG DAVON
COMPOSITION D'ÉLASTOMÈRE THERMOPLASTIQUE ET PROCÉDÉ DE PRODUCTION DE CELLE-CI

(43) Date of publication of application: 22.04.2015
(73) Proprietor: The Yokohama Rubber Co., Ltd., Tokyo 105-8685 (JP); ExxonMobil Chemical Patents Inc., Houston, TX 77079 (US)
(72) Inventor: HARA, Yuichi, Hiratsuka-shi Kanagawa 254-8601 (JP); SATO, Shun, Hiratsuka-shi Kanagawa 254-8601 (JP); BLOK, Edward, J., Wadsworth, OH 44281 (US); ELLUL, Maria, D., Silver Lake Village, OH 44224-2422 (US); DIAS, Anthony, J., Houston, TX 77062 (US); RANDAL, Howard Kerstetter, III, Wadsworth, OH 44281 (US)
(74) Representative: Uexküll & Stolberg
(86) International application number: PCT/US2012/043134
(87) International publication number: WO 2013/191685

(56) References cited:
- WO-A1-2004/081099
- WO-A1-2004/081108
- WO-A1-2009/048472
- WO-A1-2010/071642
- RU-C2- 2 331 656
- US-A- 5 849 820
- US-A1- 2008 314 492
- US-A1- 2009 312 458
- US-B2- 6 825 277

## Description

### FIELD OF THE INVENTION

The present invention relates to dynamically vulcanized alloys (DVAs) and in particular to DVAs having improved processability and stability. The invention also relates to methods for making the DVAs.

### BACKGROUND OF THE INVENTION

Compositions comprising a DVA, which may also be referred to in the art as a thermoplastic vulcanizate, often includes reinforcing fillers to improve various properties of the composition including mechanical properties and UV resistance.

One of the major drawbacks of reinforcing fillers is their negative impact on processing and other properties of the composition. Higher filler loading, which may be required to provide adequate UV resistance, is associated with higher viscosity, which may result in process issues and concerns.

Several approaches have been attempted to increase the UV resistance for the DVA films. When UV stabilizers were added directly to the DVA during preparation of the DVA, the stabilizers had a tendency to also act as a cure accelerator - resulting in scorching of the rubber. To resolve the scorching problem, US 7459212 discloses adding stabilizers to an adjacent rubber layer and relying on migration of the stabilizer into the DVA to achieve the desired properties. However, it is not always desirable to have such an adjacent rubber layer next to the DVA when used as an innerliner due to an increase in the innerliner weight.

Accordingly, a need exists for elastomeric compositions having improved UV resistance and/or processing properties, and methods to produce such compositions.

### SUMMARY OF THE INVENTION

The present invention relates to a process as defined in claim 1 and a composition as defined in claim 9. In an aspect of the present disclosure a thermoplastic elastomer composition comprises a post-vulcanized dynamically vulcanized alloy (DVA) and a low molecular weight aromatic amine stabilizer, wherein the DVA comprises an isobutylene elastomeric component dispersed as a domain in a continuous phase comprising at least one thermoplastic resin.

In another aspect of the present disclosure, a process to produce a thermoplastic elastomer composition comprises post-vulcanization mixing a DVA, with a low molecular weight aromatic amine stabilizer, wherein the DVA comprises an isobutylene elastomeric component dispersed as a domain in a continuous phase comprising at least one thermoplastic resin.

In still another aspect of the present disclosure, a process to produce a thermoplastic elastomer composition comprises dynamically vulcanizing an isobutylene elastomeric component dispersed as a domain in a continuous phase comprising at least one thermoplastic resin to produce a post-vulcanization DVA; and mixing the post-vulcanization DVA with a low molecular weight aromatic amine stabilizer to produce the thermoplastic elastomer composition.

In yet another aspect of the present disclosure, a thermoplastic elastomer composition is prepared by a process comprising dynamically vulcanizing a halogenated isobutylene elastomeric component dispersed as a domain in a continuous phase comprising a polyamide to produce a post-vulcanization DVA; and mixing the post-vulcanization DVA with a low molecular weight aromatic amine stabilizer to produce the thermoplastic elastomer composition.

In another aspect of the present disclosure, a method to reduce the melt viscosity and improve the UV resistance of a DVA comprises mixing the DVA post-vulcanization, with a low molecular weight aromatic amine stabilizer to produce a stabilized composition, wherein the DVA comprises an isobutylene elastomeric component dispersed as a domain in a continuous phase comprising at least one thermoplastic resin.

### DETAILED DESCRIPTION

In an embodiment, the present disclosure is directed to a thermoplastic elastomer composition comprising a post-vulcanized dynamically vulcanized alloy (DVA) and a low molecular weight aromatic amine stabilizer, wherein the DVA comprises an isobutylene elastomeric component dispersed as a domain in a continuous phase comprising at least one thermoplastic resin. Also disclosed is a process to make the composition. In an embodiment, the viscosity of the composition is reduced to allow for inclusion of various fillers and other additives in amounts sufficient to provide desired levels of UV resistance and other physical properties, while having a viscosity low enough to provide improved processability of the composition.

In an embodiment, the DVA comprises a thermoset component dispersed as a domain in a continuous thermoplastic phase, which has been dynamically vulcanized. This DVA is referred to herein as a "post-vulcanized" composition, which is then mixed with the stabilizer to produce the thermoplastic elastomer composition.

As used herein, "polymer" may be used to refer to homopolymers, copolymers, interpolymers, terpolymers, etc. Likewise, a copolymer may refer to a polymer comprising at least two monomers, optionally with other monomers. When a polymer is referred to as comprising a monomer, the monomer is present in the polymer in the polymerized form of the monomer or in the derivative form of the monomer. However, for ease of reference the phrase comprising the (respective) monomer or the like is used as shorthand. Likewise, when catalyst components are described as comprising neutral stable forms of the components, it is well understood by one skilled in the art, that the ionic form of the component is the form that reacts with the monomers to produce polymers.

Rubber refers to any polymer or composition of polymers consistent with the ASTM D1566 definition: "a material that is capable of recovering from large deformations, and can be, or already is, modified to a state in which it is essentially insoluble (but can swell) in boiling solvent." "Elastomer" is a term that may be used interchangeably with the term rubber. "Elastomeric composition" refers to any composition comprising at least one elastomer as defined above.

A vulcanized rubber compound by ASTM D1566 definition refers to "a crosslinked elastic material compounded from an elastomer, susceptible to large deformations by a small force capable of rapid, forceful recovery to approximately its original dimensions and shape upon removal of the deforming force." A cured elastomeric composition refers to any elastomeric composition that has undergone a curing process and/or comprises or is produced using an effective amount of a curative or cure package, and is a term used interchangeably with the term vulcanized rubber compound.

A "thermoplastic elastomer" refers to a rubberlike material "that repeatedly can be softened by heating and hardened by cooling through a temperature range characteristic of the polymer, and in the softened state can be shaped into articles" as defined in ASTM D1566. Thermoplastic elastomers are microphase separated systems of at least two polymers. One phase is the hard polymer that does not flow at room temperature, but becomes fluid when heated, that gives the thermoplastic elastomer its strength. Another phase is a soft rubbery polymer that gives thermoplastic elastomers their elasticity. The hard phase is typically the major or continuous phase.

A thermoplastic vulcanizate by ASTM D1566 definition refers to "a thermoplastic elastomer with a chemically cross-linked rubbery phase, produced by dynamic vulcanization". Dynamic vulcanization is the process of intimate melt mixing of a thermoplastic polymer and a suitable reactive rubbery polymer to generate a thermoplastic elastomer with a chemically cross-linked rubbery phase wherein the vulcanizable elastomer is vulcanized under conditions of high shear. As a result, the vulcanizable elastomer is simultaneously crosslinked and dispersed as fine particles, which have been described elsewhere as a "micro gel," within the engineering resin matrix.

Dynamic vulcanization is effected by mixing the ingredients at a temperature which is at or above the curing temperature of the elastomer in equipment such as roll mills, Banbury®mixers, continuous mixers, kneaders or mixing extruders, e.g., twin screw extruders. A unique characteristic of dynamically cured compositions is that, notwithstanding the fact that the elastomer component may be fully cured, the compositions can be processed and reprocessed by conventional thermoplastic resin processing techniques such as extrusion, injection molding, compression molding, and the like. Scrap or flashing can be salvaged and reprocessed.

In an embodiment, the thermoset component is an elastomeric component having a small particle size where the number average equivalent domain diameter ranges from 0.1 to 1 micron. In an embodiment, the continuous thermoplastic phase is a polyamide, also referred to as a nylons or nylons. Such compositions are particularly suited for use as vapor barriers in pneumatic tires, and the like.

In an embodiment, the elastomeric component comprises an isobutylene elastomer, preferably a halogenated isobutylene elastomer, more preferably a copolymer of isobutylene and para-alkylstyrene, such as described in European Patent No. 0344021 B1. As used herein, "isobutylene elastomer" or "isobutylene elastomer component" refers to elastomers or polymers comprising at least 70 mole percent repeat units from isobutylene. The copolymers preferably have a substantially homogeneous compositional distribution. Preferred alkyl groups for the para-alkyl styrene moiety include alkyl groups having from 1 to 5 carbon atoms, primary haloalkyl, secondary haloalkyl having from 1 to 5 carbon atoms and mixtures thereof. A preferred copolymer comprises isobutylene and para-methylstyrene.

Suitable halogenated isobutylene elastomer components include copolymers (such as brominated isobutylene-paramethylstyrene copolymers) having a number average molecular weight Mn of at least about 25,000, preferably at least about 50,000, preferably at least about 75,000, preferably at least about 100,000, preferably at least about 150,000. The copolymers may also have a ratio of weight average molecular weight (Mw) to number average molecular weight (Mn), i.e., Mw/Mn of less than about 10, preferably less than about 8, preferably less than about 6, preferably less than about 4, more preferably less than about 2.5, most preferably less than about 2.0. In another embodiment, suitable halogenated isobutylene elastomer components include copolymers (such as brominated isobutylene-paramethylstyrene copolymers) having a Mooney viscosity (1+4) at 125°C (as measured by ASTM D 1646-99) of 25 or more, preferably 30 or more, more preferably 40 or more.

In one embodiment, brominated copolymers of isobutylene and para-methylstyrene include those having 5 to 12 weight percent para-methylstyrene, 0.3 to 1.8 mol % brominated para-methylstyrene, and a Mooney viscosity of 30 to 65(1+4) at 125°C (as measured by ASTM D 1646-99).

In an embodiment, the halogenated isobutylene elastomer component can be prepared from isobutylene and about 0.5 to 25 percent by weight, preferably about 1 to 20 percent by weight, based upon the total amount of the comonomers, of p-alkylstyrene, preferably p-methylstyrene, followed by halogenation. Typically, the slurry polymerization of the monomer mixture is carried out in the presence of a Lewis acid catalyst and the subsequent halogenation is carried out in the presence of a radical initiator such as heat and/or light or a chemical initiator in the form of a solution. The content of the halogen (e.g., Br and/or Cl, preferably Br) is preferably less than about 10 percent by weight, more preferably about 0.1 to about 7 percent by weight, based upon the total amount of the copolymer. In an embodiment, the preferred elastomeric component comprises an isobutylene elastomer, preferably a halogenated isobutylene elastomer, with brominated p-methylstyrene-co-isobutylene polymers (BIMS) being most preferred.

For purposes of the present invention, a thermoplastic (alternatively referred to as thermoplastic resin) useful in the present invention is a thermoplastic polymer, copolymer, or mixture thereof having a Young's modulus of more than 200 MPa at 23°C. The resin should have a melting temperature of about 170°C to about 260°C, preferably less than 260°C, and most preferably less than about 240°C. By conventional definition, a thermoplastic is a synthetic resin that softens when heat is applied and regains its original properties upon cooling.

Such thermoplastic resins may be used singly or in combination and generally contain nitrogen, oxygen, halogen, sulfur or other groups capable of interacting with an aromatic functional groups such as halogen or acidic groups. Suitable thermoplastic resins include resins selected from the group consisting or polyamides, polyimides, polycarbonates, polyesters, polysulfones, polylactones, polyacetals, acrylonitrile-butadienestyrene resins (ABS), polyphenyleneoxide (PPO), polyphenylene sulfide (PPS), polystyrene, styreneacrylonitrile resins (SAN), styrene maleic anhydride resins (SMA), aromatic polyketones (PEEK, PED, and PEKK), ethylene copolymer resins (EVA or EVOH) and mixtures thereof.

Suitable polyamides (nylons) comprise crystalline or resinous, high molecular weight solid polymers including copolymers and terpolymers having recurring amide units within the polymer chain. Polyamides may be prepared by polymerization of one or more epsilon lactams such as caprolactam, pyrrolidione, lauryllactam and aminoundecanoic lactam, or amino acid, or by condensation of dibasic acids and diamines. Both fiber-forming and molding grade nylons are suitable. Examples of such polyamides are polycaprolactam (nylon-6), polylauryllactam (nylon-12), polyhexamethyleneadipamide (nylon-6,6) polyhexamethyleneazelamide (nylon-6,9), polyhexamethylenesebacamide (nylon-6,10), polyhexamethyleneisophthalamide (nylon-6, IP) and the condensation product of 11-amino-undecanoic acid (nylon-11). Commercially available polyamides may be advantageously used in the practice of this invention, with linear crystalline polyamides having a softening point or melting point between 160 and 260°C being preferred. Copolymers Nylon 48, Nylon MXD6, Nylon 6/66 (N6/66), Nylon 610 (N610), Nylon 612 (N612) may also be used. The copolymers thereof and any blends thereof may also be used.

Additional examples of satisfactory polyamides include those having a softening point below 275°C, and others described in Kirk-Othmer, Encyclopedia of Chemical Technology, v. 10, page 919, and Encyclopedia of Polymer Science and Technology, Vol. 10, pages 392-414. Commercially available thermoplastic polyamides may be advantageously used in the practice of this invention, with linear crystalline polyamides having a softening point or melting point between 160°C-230°C being preferred.

In an embodiment, the polyamide is at least one member selected from the group consisting of Nylon 6, Nylon 66, Nylon 11, Nylon 69, Nylon 12, Nylon 610, Nylon 612, Nylon 6/66 and copolymers thereof.

Suitable polyesters which may be employed include the polymer reaction products of one or a mixture of aliphatic or aromatic polycarboxylic acids esters of anhydrides and one or a mixture of diols. Examples of satisfactory polyesters include poly (trans-1,4-cyclohexylene C₂₋₆ alkane dicarboxylates such as poly(trans-1,4-cyclohexylene succinate) and poly (trans-1,4-cyclohexylene adipate); poly (cis or trans-1,4-cyclohexanedimethylene) alkanedicarboxylates such as poly(cis-1,4-cyclohexanedimethylene) oxlate and poly-(cis-1,4-cyclohexanedimethylene) succinate, poly (C₂₋₄ alkylene terephthalates) such as polyethyleneterephthalate and polytetramethyleneterephthalate, poly (C₂₋₄ alkylene isophthalates such as polyethyleneisophthalate and polytetramethyleneisophthalate and like materials. Preferred polyesters are derived from aromatic dicarboxylic acids such as naphthalenic or phthalic acids and C₂ to C₄ diols, such as polyethylene terephthalate and polybutylene terephthalate. Preferred polyesters will have a melting point in the range of 160°C to 260°C.

Poly(phenylene ether) (PPE) resins which may be used in accordance with this invention are well known, commercially available materials produced by the oxidative coupling polymerization of alkyl substituted phenols. They are generally linear, amorphous polymers having a glass transition temperature in the range of 190°C to 235°C.

Ethylene copolymer resins useful in the invention include copolymers of ethylene with unsaturated esters of lower carboxylic acids as well as the carboxylic acids per se. In particular, copolymers of ethylene with vinylacetate or alkyl acrylates for example methyl acrylate and ethyl acrylate can be employed. These ethylene copolymers typically comprise about 60 to about 99 wt% ethylene, preferably about 70 to 95 wt% ethylene, more preferably about 75 to about 90 wt% ethylene. The expression "ethylene copolymer resin" as used herein means, generally, copolymers of ethylene with unsaturated esters of lower (C₁ - C₄) monocarboxylic acids and the acids themselves; e.g. acrylic acid, vinyl esters or alkyl acrylates. It is also meant to include both "EVA" and "EVOH", which refer to ethylene-vinylacetate copolymers, and their hydrolyzed counterpart ethylenevinyl alcohols.

In the DVA, the halogenated isobutylene elastomer comprises less than or equal to about 95 parts by weight per 100 parts by weight of the alloy, preferably from about 95 to 5 parts by weight of the alloy. In an embodiment, the elastomer is present in an amount of 5 to 80 parts by weight of the alloy. In an embodiment, the elastomer is present in an amount of 10 to 65 parts by weight of the alloy. In an embodiment, the amount of the thermoplastic resin is greater than or equal to about 5 parts by weight per 100 parts by weight of the alloy, preferably from about 5 to 95 parts by weight of the alloy. In one embodiment, the halogenated isobutylene elastomer comprises from 5 to 80 parts by weight and the polyamide comprises from 20 to 95 parts by weight, wherein the total parts by weight of the of the halogenated isobutylene elastomer and the polyamide totals 100.

The DVA may further comprise a vulcanization or cross-linking agent, a vulcanization or cross-linking accelerator, various types of oils, an anti-aging agent, reinforcing agent, plasticizer, softening agent, or other various additives generally mixed into general rubbers. The compounds are mixed and vulcanized by general methods to cross-link the composition. The amounts of these additives generally are known to one of skill in the art and are selected so long as they do not run counter to the improvements observed with thermoplastic elastomer compositions according to the present disclosure.

The thermoplastic elastomeric composition may further comprise one or more composition additives including carbon black; fatty acids; waxes; antioxidants; curatives; calcium carbonate; clay; silica; talc; UV absorbers; UV stabilizers; antiozonants; ZnO; CuI; scorch inhibiting agents; anti-cling additives; tackifiers such as polybutenes, terpene resins, aliphatic and aromatic hydrocarbon resins, alkali metal and glycerol stearates and hydrogenated rosins; heat stabilizers; antiblocking agents; release agents; anti-static agents; pigments; colorants; dyes; or a combination thereof. Each or any of the composition additives may be present in the composition at less than or equal to about 50 phr, less than or equal to about 40 phr, less than or equal to about 30 phr, less than or equal to about 20 phr, less than or equal to about 10 phr, less than or equal to about 5 phr, less than or equal to about 3 phr, less than or equal to about 2 phr, or less than or equal to about 1.5 phr each of a composition additive.

Suitable UV absorbers and UV stabilizers include hindered amine light stabilizers (HALS). In an embodiment, the HALS include amino and amino ether derivatives of 2,2,6,6-tetramethylpiperidine, and the like. In an embodiment, the HALS is an oligomeric hindered amine light stabilizer, e.g., TINUVIN (Ciba Specialty Chemicals, USA). Suitable antioxidants include hindered phenols. Examples include those sold under the trade name IRGANOX (BASF, USA). Suitable antioxidants/antiozonates include substituted amino triazines, including 2,4,6-Tris-(N-1,4-dimethylpentyl-p-phenylenediamino)-1,3,5-triazine, sold under the trade names DURAZONE 37, CHEMTURA, USA, and the like.

In an embodiment, the thermoplastic elastomeric composition may further comprise one or more plasticizers. Examples include sulfonamide plasticizers including those sold under the trade name UNIPLEX, e.g., UNIPLEX 214 n-butylbenzene sulfonamide or BBSA (Unitex Chemical, USA), and the like.

In accordance with the invention, the thermoplastic elastomer composition comprises a DVA and a low-molecular weight aromatic amine stabilizer wherein the DVA and stabilizer are mixed as discussed herein. As used herein, "low molecular weight" refers to a compound having a number average molecular weight less than 1000 g/mol. The low-molecular weight aromatic amine stabilizer preferably has a molecular weight of less than or equal to about 500 g/mol.

An "aromatic amine stabilizer" refers to a low molecular weight compound having aromatic protons and at least one, preferably two or more, amine groups. In an embodiment, the low molecular weight aromatic amine stabilizer may have general formula (I): 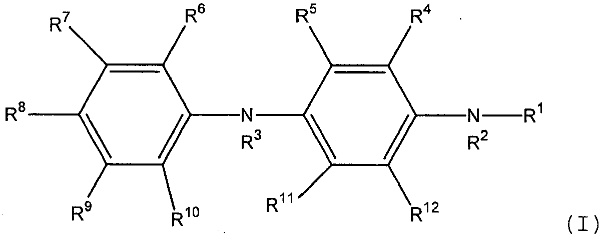 wherein R₁ is a C₁ to C₂₀ hydrocarbyl group and R², R³, R⁴, R⁵, R⁶, R⁷, R⁸, R⁹, R¹⁰, R¹¹, and R¹² are individually selected from H or C₁-C₂₀ hydrocarbyl groups. In one embodiment, any of R² to R¹² are individually selected from H or C₁-C₁₀ hydrocarbyl groups.

For purposes herein, the term "hydrocarbyl groups" refers to substituted or unsubstituted C₁-C₂₀ straight, branched and cyclic alkyl radicals, C₆-C₂₀ aromatic radicals, C₇-C₂₀ alkyl-substituted aromatic radicals, and C₇-C₂₀ aryl-substituted alkyl radicals, halogenated radicals, which may include various substituents. In addition two or more such radicals may together form a fused ring system, including partially or fully hydrogenated fused ring systems. In an embodiment, the hydrocarbyl groups may be substituted or unsubstituted C₁-C₁₀ straight, branched and cyclic alkyl radicals, C₆-C₁₀ aromatic radicals, C₇-C₁₀ alkyl-substituted aromatic radicals, and C₇-C₁₀ aryl-substituted alkyl radicals, halogenated radicals, which may include various substituents. Representative hydrocarbyl substituents include mono-, di- and tri-substituted functional groups, also referred to herein as radicals, comprising a Group 14 element, wherein each of the hydrocarbyl groups contains from 1 to 20 carbon atoms. Examples of the various hydrocarbyl substituents include substituents comprising Group 15 and/or Group 16 heteroatoms. Examples include amines, phosphines, ethers, thioethers and/or derivatives thereof, e. g. amides, phosphides, per-ethers and/or thioether groups.

Other functional groups suitable for use as substituents include organic and inorganic radicals, wherein each of the functional groups comprises hydrogen, and atoms from Groups 13, 14, 15, 16, and/or 17, preferably 1 to 20 or 1 to 10 carbon atoms, oxygen, sulfur, phosphorous, silicon, selenium, or a combination thereof. In addition, functional groups may include one or more functional group substituted with one or more additional functional groups. Examples of functional group radicals include: hydrogen, hydroxyl, alkyl, alkyloxy, alkenyloxy, aryl, aryloxy, aralkyl, aralkyloxy, alkaryl, arylalkenyl, cycloalkyl, cycloalkyloxy, aliphatic, hydroxyl, alkanol, alkanolamine, oxy, acetyl, acetamido, acetoacetyl, acetonyl, acetonylidene, acrylyl, alanyl, allophanoyl, anisyl, benzamido, butryl, carbonyl, carboxy, carbazoyl, caproyl, capryl, caprylrl, carbamido, carbamoyl, carbamyl, carbazoyl, chromyl, cinnamoyl, crotoxyl, cyanato, decanoly, disiloxanoxy, epoxy, formamido, formyl, furyl, furfuryl, furfurylidene, glutaryl, glycinamido, glycolyl, glycyl, glyocylyl, heptadecanoyl, heptanolyl, hydroperoxy, hydroxamino, hydroxylamido, hydrazido/hydrazide, hydroxy, iodoso, isoccyanato, isonitroso, keto, lactyl, methacrylyl, malonyl, nitroamino, nitro, nitrosamino, nitrosimino, nitrosyllnitroso, nitrilo, oxamido, peroxy, phosphinyl, phosphide/phosphido, phosphite/phosphito, phospho, phosphono, phosphoryl, seleninyl, selenonyl, siloxy, succinamyl, sulfamino, sulfamyl, sulfeno, thiocarboxy, toluyl, ureido, valeryl radicals, acetimido, amidino, amido, amino, aniline, anilino, arsino, azido, azino, azo, azoxy, benzylidine, benzidyne, biphenyly, butylene, iso-butylene, sec-butylene, tert-butylene, cyano, cyanamido, diazo, diazoamino, ethylene, disilanyl, glycidyl, guanidino, guanyl, heptanamido, hydrazino, hydrazo, hypophosphito, imido, isobutylidene, isopropylidene, silyl, silylene, methylene, mercapto, methylene, ethylene, naphthal, napthobenzyl, naphthyl, naphthylidene, propylene, propylidene, pryidyl, pyrryl, phenethyl, phenylene, pyridino, sulfinyl, sulfo, sulfonyl, tetramethylene, thenyl, thienyl, thiobenzyl, thiocarbamyl, thiocarbonyl, thiocyanato, thionyl, thiuram, toluidino, tolyl, a-tolyl, tolylene, a-tolylene, tosyl, triazano, ethenyl (vinyl), selenyl, trihydrocarbylamino, trihaloamino, trihydrocarbyl phosphite, trihalophosphine, trimethylene, trityl, vinylidene, xenyl, xylidino, xylyl, xylylene, dienes, and combinations thereof.

In an embodiment, the low molecular weight aromatic amine stabilizer comprises a diaryl-p-phenylene diamine. An example of a diaryl-p-phenylene diamine includes a compound having the following formula: 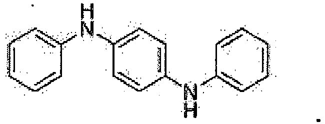 In an embodiment, the aromatic amine stabilizer comprises N-(1,3-dimethylbutyl)-N'-phenyl-p-phenylenediamine, having formula (II):

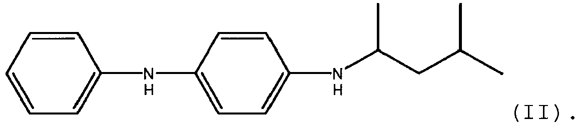

The stabilizer is present in the thermoplastic elastomeric composition at greater than or equal to about 1.5 part per hundred of rubber by weight (phr), greater than or equal to about 2 phr, greater than or equal to about 2.5 phr, greater than or equal to about 3 phr, greater than or equal to about 3.5 phr, or greater than or equal to about 4 phr. Additionally, the stabilizer is present in the thermoplastic elastomeric composition at less than or equal to about 20 phr, less than or equal to about 10 phr, less than or equal to about 9 phr, less than or equal to about 8 phr, less than or equal to about 7 phr, less than or equal to about 6 phr, or less than or equal to about 5 phr. The stabilizer is mixed with the vulcanized DVA in amounts ranging from any of the above listed minimum parts by weight to any of the above listed maximum parts by weight.

### Process

Per the invention, a process to produce a thermoplastic elastomer composition comprises post-vulcanization mixing a dynamically vulcanized alloy with a low molecular weight aromatic amine stabilizer, wherein the DVA comprises an isobutylene elastomeric component dispersed as a domain in a continuous phase comprising at least one thermoplastic resin.

In an embodiment, a process to produce a thermoplastic elastomer composition comprises dynamically vulcanizing an isobutylene elastomeric component dispersed as a domain in a continuous phase comprising at least one thermoplastic resin to produce a 'post-vulcanization DVA' followed by mixing the post-vulcanization DVA with a low molecular weight aromatic amine stabilizer to produce the thermoplastic elastomer composition.

In an embodiment, the thermoplastic elastomer composition is produced by first heating the post-vulcanization DVA to a temperature above the glass transition or softening temperature of the alloy and then mixing the at least partially melted alloy under high shear conditions with the low molecular weight aromatic amine stabilizer, and optionally with other composition additives, plasticizers, and the like to produce the mixture or blend. In an embodiment, the mixture is a homogeneous mixture comprising the various components interdispersed with one another. By homogeneous mixture it is not intended that the mixture is a single phase, but instead is intended to represent a well blended mixture of the various materials present in the composition. In an embodiment, the mixing may be conducted via roll mills, BANBURY mixers, continuous mixers, kneaders, mixing extruders, e.g., twin screw extruders, combinations thereof, and/or the like.

In an embodiment, a method to reduce the viscosity and improve the UV resistance of a DVA comprises mixing the DVA post-vulcanization, with a low molecular weight aromatic amine stabilizer to produce a stabilized composition, wherein the DVA comprises an isobutylene elastomeric component dispersed as a domain in a continuous phase comprising a polyamide. As used herein, the viscosity of a DVA refers to the viscosity determined by Laboratory Capillary Rheometry (LCR) as described in ASTM D3855-08 at 1200 s-1, 220°C, using a 30.0 mm die length, 1.0 mm diameter. As used herein, "UV resistance" refers to the ability of a modified composition to resist change in the tensile strength after aging as defined herein of the thermoplastic elastomeric composition with UV exposure, relative to the tensile strength of the modified composition without aging.

In an embodiment, the tensile strength of the thermoplastic elastomeric composition after aging is greater than the tensile strength of the composition determined prior to said aging. As used in the present specification and claims, "aging" refers to aging the composition according to SAE J1960 or an equivalent thereof at 1875 kJ/m² at 340 nm, and the tensile strength is determined according to ASTM D882-02 or an equivalent thereof.

In an embodiment, the elongation at break of the thermoplastic elastomeric composition after aging is greater than the elongation at break of the composition determined prior to said aging, wherein the composition is aged according to SAE J1960 or an equivalent thereof at 1875 kJ/m² at 340 nm. As used in the specification and claims, the elongation at break is determined according to ASTM D882-02 or an equivalent thereof.

Accordingly, the present disclosure provides the following embodiments:
A. A thermoplastic elastomer composition, comprising a post-vulcanized dynamically vulcanized alloy and a low molecular weight aromatic amine stabilizer, wherein the dynamically vulcanized alloy comprises an isobutylene elastomeric component dispersed as a domain in a continuous phase comprising at least one thermoplastic resin.
B. A process to produce a thermoplastic elastomer composition, comprising post-vulcanization mixing of a dynamically vulcanized alloy, with a low molecular weight aromatic amine stabilizer, wherein the dynamically vulcanized alloy comprises an isobutylene elastomeric component dispersed as a domain in a continuous phase comprising at least one thermoplastic resin.
C. A process to produce a thermoplastic elastomer composition, comprising dynamically vulcanizing an isobutylene elastomeric component dispersed as a domain in a continuous phase comprising at least one thermoplastic resin to produce a post-vulcanization dynamically vulcanized alloy; and post-vulcanization mixing of the dynamically vulcanized alloy with a low molecular weight aromatic amine stabilizer to produce the thermoplastic elastomer composition.
D. A thermoplastic elastomer composition prepared by a process comprising: dynamically vulcanizing a halogenated isobutylene elastomeric component, the elastomeric component comprising not more than 10 phr of a curative or cross-linking agent, dispersed as a domain in a continuous phase comprising a polyamide to produce a post-vulcanization dynamically vulcanized alloy; and post-vulcanization mixing of the dynamically vulcanized alloy with a low molecular weight aromatic amine stabilizer to produce the thermoplastic elastomer composition.
E. A method to reduce the viscosity and improve the UV resistance of a dynamically vulcanized alloy, comprising: post-vulcanization mixing of the dynamically vulcanized alloy, with a low molecular weight aromatic amine stabilizer to produce a stabilized composition, wherein the dynamically vulcanized alloy comprises an isobutylene elastomeric component dispersed as a domain in a continuous phase comprising a polyamide.
F. The invention of any one of embodiments A to E, wherein the tensile strength of the composition after aging is greater than the tensile strength of the composition determined prior to said aging.
G. The invention of any one of embodiments A to F, wherein the elongation at break of the composition after aging is greater than the elongation at break of the composition determined prior to said aging.
H. The invention of any one of embodiments A to G, wherein the isobutylene elastomeric component is halogenated.
I. The invention of any one of embodiments A to H, wherein the isobutylene elastomer comprises from 95 to 25 parts by weight of the composition and the polyamide comprises from 5 to 75 parts by weight of the composition, wherein the total parts by weight of the halogenated isobutylene elastomer and the polyamide totals 100.
J. The invention of any one of embodiments A to I, wherein the stabilizer is present in the composition at greater than or equal to 1.5 phr.
K. The invention of any one of embodiment A to J, wherein the stabilizer is present in the composition at not more than 20 or 10 phr or 8 phr.
L. The invention of any one of embodiments A to K, wherein the isobutylene elastomeric component comprises brominated poly(isobutylene-co-p-methylstyrene).
M. The invention of any one of embodiments A to L, wherein the polyamide is at least one member selected from the group consisting of Nylon 6, Nylon 66, Nylon 11, Nylon 69, Nylon 12, Nylon 610, Nylon 612, Nylon 48, Nylon MXD6, Nylon 6/66 and copolymers thereof.
N. The invention of any one of embodiments A to M, wherein the low molecular weight aromatic amine stabilizer has the general formula: 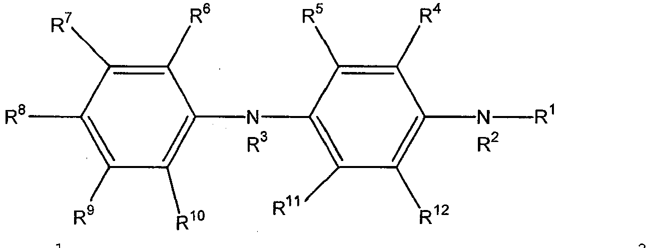 wherein R¹ is a C₁ to C₂₀ hydrocarbyl group and R², R³, R⁴, R⁵, R⁶, R⁷, R⁸, R⁹, R¹⁰, R¹¹, and R¹² are individually selected from H or C₁-C₂₀ hydrocarbyl groups.
O. The invention of embodiment N wherein any one of R² to R¹² is individually selected from H or C₁-C₁₀ hydrocarbyl groups.
P. The invention of any one of embodiments A to O, wherein the low molecular weight aromatic amine stabilizer as a molecular weight of less than or equal to about 500 g/mol.
Q. The invention of any one of embodiments A to P, wherein the low molecular weight aromatic amine stabilizer comprises a diaryl-p-phenylene diamine.
R. The invention of any one of embodiments A to Q, wherein the low molecular weight aromatic amine stabilizer is N-(1,3-dimethylbutyl)-N'-phenyl-p-phenylenediamine.
S. The invention of any one of embodiments A to R, wherein the composition further comprises carbon black, a fatty acid, a wax, an antioxidant, a curative, calcium carbonate, clay, silica, a UV absorber, an antiozonant, a tackifier, ZnO, CuI, a scorch inhibiting agent, or a combination thereof.

### EXAMPLES

A series of exemplary and comparative compositions were prepared by heating a post-vulcanization dynamically vulcanized alloy (DVA) while mixing to partially melt the material, followed by adding the stabilizer and other components to the melt while mixing to produce the composition. The compositions were prepared using the materials listed in Table 1.

**Table 1. Component Description**

| Trade Name | Description | Supplier |
|---|---|---|
| Raven 7000 | Carbon black | Columbian Chemicals |
| Vulcan 9A32 | Carbon black | Cabot Corp. |
| Hombitec RM230L | TiO₂ | Sachtleben |
| Santoflex 6PPD | N-(1,3-dimethylbutyl)-N'-phenyl-p-phenylenediamine Stabilizer | Flexsys |
| Exxcore DVA, | DVA | Exxonmobil Chemical Company, USA. |
| ZnO | ZnO | Horsehead Corp. |
| Durazone 37 | Antioxidant/antiozonant | Chemtura |
| Polystay K | Phenolic antioxidant | Goodyear Chemical |
| Chimmasorb 119 | Hindered amine UV stabilizer | Chembridge Intl. Corp. |
| UV-3529 | Hindered amine UV stabilizer | Dannier Chemical, Inc. |
| UV-3346 | Hindered amine UV stabilizer | Cytec |
| Tinuvin 622 | Hindered amine UV stabilizer | Ciba |
| UV-2908 | Hindered hydroxybenzoate UV stabilizer | Hanson Group |
| Polystay 100 | Diaryl-p-phenylenediamine stabilizer | Goodyear Chemical |
| Wingstay L | Poly-phenolic antioxidant | Eliokem |
| Wingstay 29 | Antioxidant para oriented styrenated diphenylamines | Eliokem |
| Zinc stearate | Zinc stearate | Lab stock |
| Stearic acid | Stearic acid | Lab stock |
| Nylon 6,66 | Nylon 6,66 | Exxonmobil |
| Uniplex 214 | N-butylbenzene sulfonamide plasticizer | Unitex |
| Copper iodide | Copper iodide | Lab stock |
| Irganox 1098 | Antioxidant hindered phenol | Ciba-BASF |
| Talc | Talc | Lab stock |
| HPR AR 201 | Maleic anhydride-graft-modified ethylene-ethyl acrylate copolymer resin compatibilizer | Mitsui-Dupont |
| Exxpro 89-4 | Halogenated poly(isobutylene-co-p-methylstyrene | ExxonMobil |

The compositions were tested according to the testing parameters of the methods listed in Table 2.

**Table 2. Test Methods**

| | | |
|---|---|---|
| Specific Gravity | ASTM-D792 | Samples press cured, 5 minutes @ 207°C, 2 mm thickness at 5 seconds |
| Hardness Shore A, Shore D | ASTM D2240 | |
| 10% Modulus (MPa) | ISO-37 ASTM-D412 | |
| 50% Modulus (MPa) | ISO-37 ASTM-D412 | |
| 100% Modulus (MPa) | ISO-37 ASTM-D412 | |
| Ultimate Tensile Strength (UTS) (MPa) | ISO-37 ASTM-D412 | |
| Ultimate Elongation (%) | ISO-37 ASTM-D412 | |
| Maximum Strain (%) | ISO-37 ASTM-D412 | |
| Weight Gain (%) | TPE-0018 | |
| Laboratory Capillary Rheometry (LCR) (Pa-s) | ASTM D3855 | Pa-s @ 1200; 220°C, 30.0 mm die length, 1.0 mm diameter |
| Tension Set (%) | TPE-0053 ASTM D412 | |
| Tensile Strength (psi) | ISO 37 British Std | |
| Elongation at break (%) | ISO 37 British Std | |
| Aging | SAE J1960 | 1875 kJ/m² @ 340 nm |

A series of six compositions were prepared by first forming the DVA to produce a post-vulcanization DVA, and then melt mixing the DVA with or without the selected low molecular weight amine stabilizer. The results are listed in Table 3 below. The compositions obtained were then prepared and tested. The test results are shown in Table 4.

**Table 3. Test Compositions**

| Component | Comp. 1 (phr) | Comp. 2 (phr) | Comp. 3 (phr) | Comp. 4 (phr) | Comp. 5 (phr) | Comp. 6 (phr) |
|---|---|---|---|---|---|---|
| Exxpro | 100.00 | 100.00 | 100.00 | 100.00 | 100.00 | 100.00 |
| Talc | 2.50 | 2.50 | 2.50 | 2.50 | 2.50 | 2.50 |
| ZnO | 0.15 | 0.15 | 0.15 | 0.15 | 0.15 | 0.15 |
| Zinc Stearate | 0.30 | 0.30 | 0.30 | 0.30 | 0.30 | 0.30 |
| Stearic Acid | 0.65 | 0.65 | 0.65 | 0.65 | 0.65 | 0.65 |
| Nylon 6,66 | 62.97 | 62.97 | 62.97 | 62.97 | 62.97 | 62.97 |
| Uniplex 214 | 26.99 | 26.99 | 26.99 | 26.99 | 26.99 | 26.99 |
| Copper Iodide | 0.03 | 0.03 | 0.03 | 0.03 | 0.03 | 0.03 |
| Irganox 1098 | 0.32 | 0.32 | 0.32 | 0.32 | 0.32 | 0.32 |
| Tinuvin 622LD | 0.13 | 0.13 | 0.13 | 0.13 | 0.13 | 0.13 |
| AR201 | 10.05 | 10.05 | 10.05 | 10.05 | 10.05 | 10.05 |
| DVA Total | 204.08 | 204.08 | 204.08 | 204.08 | 204.08 | 204.08 |
| 6PPD | 0 | 0.5 | 1 | 2 | 4 | 8 |
| Total | 204.08 | 204.58 | 205.08 | 206.08 | 208.08 | 212.08 |
| 6PPD (wt%) | 0 | 0.24% | 0.49% | 0.98% | 1.96% | 3.92% |
| Torque at Dump (m-g) | 1850 | 1260 | 1250 | 1230 | 1240 | 1210 |
| Melt Temp (°C) | 213 | 211 | 213 | 212 | 212 | 210 |
| Batch Time (min) | 3 | 3 | 3 | 3 | 3 | 3 |

**Table 4. Test Results**

| Test | Comp. 1 | Comp. 2 | Comp. 3 | Comp. 4 | Comp. 5 | Comp. 6 |
|---|---|---|---|---|---|---|
| Specific Gravity | 1.023 | 10.24 | 1.023 | 1.023 | 1.011 | 1.003 |
| Hardness, 5 sec Shore A | 86 | 84 | 85 | 86 | 86 | 83 |
| Hardness, 5 sec Shore D | 28 | 27 | 28 | 28 | 29 | 28 |
| 10% Modulus (MPa) | 2.65 | 3.39 | 3.28 | 3.39 | 3.75 | 3.74 |
| 50% Modulus (MPa) | 6.54 | 6.89 | 6.44 | 6.48 | 7.03 | 6.8 |
| 100% Modulus (MPa) | 9.41 | 9.90 | 9.08 | 9.04 | 9.77 | 9.34 |
| UTS (MPa) | 10.95 | 13.80 | 13.60 | 13.88 | 15.85 | 17.49 |
| Ultimate Elongation (%) | 117 | 188 | 199 | 206 | 221 | 282 |
| Maximum Strain (%) | 148 | 213 | 224 | 234 | 243 | 304 |
| Weight Gain (%) | 46 | 33 | 38 | 35 | 34 | 36 |
| LCR (Pa-s) | 377 | 443 | 401 | 361 | 322 | 275 |
| Tension Set (%) | 32 | 38 | 37 | 34 | 36 | 37 |

As seen in Tables 3 and 4, the melt viscosity as indicated by the torque at dump is lowered in proportion to the amount of amine stabilizer (6PPD) added; however, quite surprisingly, the UV stabilization as reflected in the tension set data is about the same and not significantly different regardless of the amount of stabilizer. This indicates that the amine stabilizer can effect UV stabilization while simultaneously using the amount of stabilizer added post-vulcanization to control the desired melt viscosity of the composition.

In another set of examples, the DVA utilized in Composition 1 was post-vulcanization melt blended with various samples of carbon black and TiO₂ without amine stabilizer for comparison, and with 2.5 phr of the low molecular weight amine stabilizer (6PPD) to produce the inventive compositions. The LCR, tensile strength, and elongation at break of each composition were measured. The compositions were subjected to aging, and the tensile strength re-measured to determine the change in tensile strength after aging. The data are shown in Table 5.

**Table 5. Compounded Formulations Aging Testing**

| Composition | Carbon Black (1.5 phr) | TiO₂ (1.5 phr) | 6PPD (phr) | LCR (Pa-s) | Tensile Strength (MPa) | Elongation at break (%) | Aged tensile strength (% change) |
|---|---|---|---|---|---|---|---|
| Comp. 7 | | | | 742 | 11.89 | 289 | -69.5 |
| Comp. 8 | Raven 7000 | | | 749 | 12.67 | 344 | -7.35 |
| Comp. 9 | Vulcan 9a32 | | | 721 | 12.98 | 312 | -2.14 |
| Comp. 10 | | RM230L | | 741 | 12.53 | 320 | -53.14 |
| Comp. 11 | Raven 7000 | RM230L | | 791 | 9.928 | 220 | 1.51 |
| Comp. 12 | Vulcan 9a32 | RM230L | | 774 | 12.13 | 324 | -4.66 |
| Comp. 13 | Raven 7000 | RM300 | | 739 | 11.91 | 314 | -1.56 |
| Comp. 14 | | RM300 | | 752 | 12.09 | 298 | -46.62 |
| Comp. 15 | Vulcan 9a32 | RM300 | | 803 | 12.83 | 302 | -2.71 |
| Comp. 16 | | | 2.5 | 548 | 16.96 | 388 | -62.61 |
| Comp. 17 | Raven 7000 | | 2.5 | 595 | 16.37 | 383 | -5.57 |
| Comp. 18 | Vulcan 9a32 | | 2.5 | 593 | 17.81 | 395 | -1.55 |
| Comp. 19 | | RM230L | 2.5 | 601 | 16.50 | 381 | -49.33 |
| Comp. 20 | Raven 7000 | RM230L | 2.5 | 602 | 16.68 | 382 | -1.46 |
| Comp. 21 | Vulcan 9a32 | RM230L | 2.5 | 635 | 16.51 | 351 | 9.12 |
| Comp. 22 | | RM300 | 2.5 | 561 | 15.55 | 377 | -49.50 |
| Comp. 23 | Raven 7000 | RM300 | 2.5 | 630 | 10.53 | 228 | 5.06 |
| Comp. 24 | Vulcan 9a32 | RM300 | 2.5 | 602 | 16.97 | 393 | -6.58 |

The data in Table 5 show that the presence of the amine stabilizer reduced the viscosity of compositions prepared with carbon black and/or TiO₂, as seen in the lowered LCR data of compositions 16 to 24 relative to compositions 7 to 15 without the amine stabilizer. The amine stabilizer also improved (increased) the tensile strength and elongation at break, and also generally resulted in less decrease or a greater increase in the aged tensile strength.

Examples were prepared by melt mixing the post-vulcanized DVA utilized in Composition 1 with a variety of components typical of an end use in a pneumatic tire application. The compositions were prepared with carbon black, zinc oxide and with and without various stabilizers and antioxidants. The tensile strength and elongation were measured, the samples aged and the tensile strength and elongation were again measured to determine the change in tensile strength and the change in elongation at break after aging. The results are shown in Tables 6, 7, and 8.

**Table 6. Compositions 25 to 34**

| Component / Property | Comp. 25 (phr) | Comp. 26 (phr) | Comp. 27 (phr) | Comp. 28 (phr) | Comp. 29 (phr) | Comp. 30 (phr) | Comp. 31 (phr) | Comp. 32 (phr) | Comp. 33 (phr) | Comp. 34 (phr) |
|---|---|---|---|---|---|---|---|---|---|---|
| DVA | 204.03 | 204.03 | 204.03 | 204.03 | 204.03 | 204.03 | 204.03 | 204.03 | 204.03 | 204.03 |
| Carbon black | | 0.75 | 0.75 | 0.75 | 0.75 | 0.75 | 0.75 | 0.75 | 0.75 | |
| ZnO 20 | | 1.5 | 1.5 | 1.5 | 1.5 | 1.5 | 1.5 | 1.5 | 1.5 | 1.5 |
| Durazone 37 | | | | | | 1.5 | 3.0 | | | |
| Polystay K | | | | 1.5 | 3.0 | | | | | |
| Chimmasorb 119 | | 1.5 | 3.0 | | | | | | | |
| 6PPD | | | | | | | 1.5 | 3.0 | | |
| Tensile Strength (% change) | 100 | 11.0 | 8.0 | 32.7 | 27.2 | 24.6 | 3.1 | 32.2 | 13.4 | 100 |
| Elongation at break (% change) | 100 | 48.8 | 58.7 | 69.1 | 61.5 | 42.0 | 6.8 | 54.6 | 10.5 | 100 |

**Table 7. Compositions 35 to 44**

| Component | Comp. 35 (phr) | Comp. 36 (phr) | Comp. 37 (phr) | Comp. 38 (phr) | Comp. 39 (phr) | Comp. 40 (phr) | Comp. 41 (phr) | Comp. 42 (phr) | Comp. 43 (phr) | Comp. 44 (phr) |
|---|---|---|---|---|---|---|---|---|---|---|
| DVA | 204.03 | 204.03 | 204.03 | 204.03 | 204.03 | 204.03 | 204.03 | 204.03 | 204.03 | 204.03 |
| Carbon black | 0.75 | 0.75 | 0.75 | 0.75 | 0.75 | 0.75 | 0.75 | 0.75 | 0.75 | 0.75 |
| ZnO K-911 | 1.5 | 1.5 | 1.5 | 1.5 | 1.5 | 1.5 | 1.5 | 1.5 | 1.5 | 1.5 |
| UV 3529 | | | | | 1.5 | 3.0 | | | | |
| UV 3346 | | | 1.5 | 3.0 | | | | | | |
| Tinuvin 622 | 1.5 | 3.0 | | | | | | | | |
| UV 2908 | | | | | | | 1.5 | 3.0 | | |
| Polystay 100 | | | | | | | | | 1.5 | 3.0 |
| Tensile Strength (% change) | -1 | 19.2 | 42.2 | 27.3 | 5.7 | 8.2 | 28.5 | 20.4 | -29.4 | 6.0 |
| Elongation at break (% change) | 45.8 | 31.4 | 64.4 | 66.3 | 58.1 | 42.5 | 75.7 | 41.4 | 4.4 | 22.2 |

**Table 8. Compositions 45 to 50**

| Component | Comp. 45 (phr) | Comp. 46 (phr) | Comp. 47 (phr) | Comp. 48 (phr) | Comp. 49 (phr) | Comp. 50 (phr) |
|---|---|---|---|---|---|---|
| DVA | 204.03 | 204.03 | 204.03 | 204.03 | 204.03 | 204.03 |
| Carbon black | 0.75 | 0.75 | 0.75 | 0.75 | 0.75 | 0.75 |
| ZnO K-911 | 1.5 | 1.5 | 1.5 | 1.5 | 1.5 | 1.5 |
| Polystay 100 | | | | | 1.5 | 3.0 |
| Wingstay L | | | 1.5 | 3.0 | | |
| Wingstay 29 | 1.5 | 3.0 | | | | |
| Tensile Strength (% change) | 2.1 | 18.3 | 27.2 | -3.3 | 3.3 | -4.5 |
| Elongation at break (% change) | 54.9 | 42.3 | 59.4 | 89.8 | 11.3 | -3.3 |

Accordingly, as the data show, the post-vulcanization mixing of a low molecular weight stabilizer in a DVA results in a composition having improved processability including a reduced viscosity and improved UV resistance, especially in the case of the inventive low molecular weight amine stabilizers in compositions 31, 32 and 43-50.

Any range of numbers recited in the specification hereinabove or in the claims hereinafter, such as that representing a particular set of properties, units of measure, conditions, physical states or percentages, is intended to literally incorporate expressly herein by reference or otherwise, any number falling within such range, including any subset of numbers or ranges subsumed within any range so recited.

The principles, preferred embodiments, and modes of operation of the present invention have been described in the foregoing specification. Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised.

## Claims

1. A process to produce a thermoplastic elastomer composition, comprising:
dynamically vulcanizing an isobutylene elastomeric component dispersed as a domain in a continuous phase comprising at least one thermoplastic resin to produce a post-vulcanized dynamically vulcanized alloy; and
mixing of the post-vulcanized dynamically vulcanized alloy with 1.5 phr or greater of a low molecular weight aromatic amine stabilizer having a number average molecular weight less than 1000 g/mol, to produce the thermoplastic elastomer composition,
wherein the melt viscosity of the post-vulcanized dynamically vulcanized alloy is reduced by the mixing with the stabilizer.

2. The process of claim 1, wherein the tensile strength of the composition after aging according to SAE J1960, is greater than the tensile strength of the composition determined prior to said aging, or wherein the elongation at break of the composition after aging is greater than the elongation at break of the composition determined prior to said aging.

3. The process of claim 1 or 2, wherein the isobutylene elastomeric component comprises from 95 to 25 parts by weight, and the thermoplastic resin comprises from 5 to 75 parts by weight, wherein the total parts by weight of the isobutylene elastomeric component and the thermoplastic resin totals 100.

4. The process of any one of claims 1 to 3, wherein the low molecular weight aromatic amine stabilizer has the general formula: 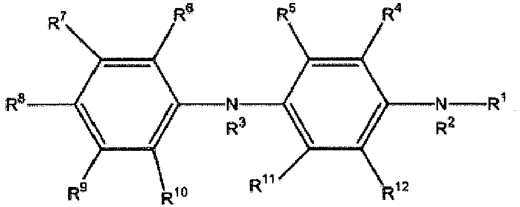 wherein R₁ is a C₁ to C₂₀ hydrocarbyl group and R², R³, R⁴, R⁵, R⁶, R⁷, R⁸, R⁹, R¹⁰, R¹¹, and R¹² are individually H or C₁-C₂₀ hydrocarbyl groups.

5. The process of any one of claims 1 to 4, wherein the low molecular weight aromatic amine stabilizer has a molecular weight of less than or equal to 500 g/mol.

6. The process of any one of claims 1 to 5, wherein the low molecular weight aromatic amine stabilizer comprises a diaryl-p-phenylenediamine.

7. The process of any one of claims 1 to 5, wherein the low molecular weight aromatic amine stabilizer comprises N-(1,3-dimethylbutyl)-N'-phenyl-p-phenylenediamine.

8. The process of any one of claims 1 to 7, wherein the at least one thermoplastic resin is at least one polyamide selected from the group consisting of Nylon 6, Nylon 66, Nylon 11, Nylon 69, Nylon 12, Nylon 610, Nylon 612, Nylon 48, Nylon MXD6, Nylon 6/66 and copolymers thereof.

9. A thermoplastic elastomer composition prepared by a process comprising:
dynamically vulcanizing a halogenated isobutylene elastomeric component, wherein the elastomeric component is blended with not more than 10 phr of a cross-linking agent, dispersed as a domain in a continuous phase comprising a polyamide to produce a post-vulcanized dynamically vulcanized alloy; and
mixing of the post-vulcanized dynamically vulcanized alloy with 1.5 to 10 phr of a low molecular weight aromatic diamine stabilizer having a number average molecular weight less than 1000 g/mol, to produce the thermoplastic elastomer composition,
wherein the melt viscosity of the post-vulcanized dynamically vulcanized alloy is reduced by the mixing with the stabilizer.

## Patentansprüche

1. Verfahren zum Herstellen von thermoplastischer Elastomerzusammensetzung, bei dem
eine elastomere Isobutylenkomponente, die als Domäne in einer kontinuierlichen Phase dispergiert ist, die mindestens ein thermoplastisches Harz umfasst, dynamisch vulkanisiert wird, um eine nachvulkanisierte dynamisch vulkanisierte Legierung herzustellen; und
die nachvulkanisierte dynamisch vulkanisierte Legierung mit 1,5 phr oder mehr von niedermolekulargewichtigem aromatischem Aminstabilisator gemischt wird, mit einem durchschnittlichen Molekulargewicht (Zahlenmittel) von weniger als 1000 g/mol, um die thermoplastische Elastomerzusammensetzung herzustellen,
wobei die Schmelzviskosität der nachvulkanisierten dynamisch vulkanisierten Legierung durch das Mischen mit dem Stabilisator reduziert wird.

2. Verfahren nach Anspruch 1, bei dem die Zugfestigkeit der Zusammensetzung nach Alterung gemäß SAE J1960 größer als die Zugfestigkeit der Zusammensetzung ist, die vor dieser Alterung bestimmt wurde, oder wobei die Bruchdehnung der Zusammensetzung nach Alterung größer als die Bruchdehnung der Zusammensetzung ist, die vor dieser Alterung bestimmt wurde.

3. Verfahren nach Anspruch 1 oder 2, bei dem die elastomere Isobutylenkomponente 95 bis 25 Gewichtsteile umfasst, und das thermoplastische Harz 5 bis 75 Gewichtsteile umfasst, wobei die gesamten Gewichtsteile der elastomeren Isobutylenkomponente und des thermoplastischen Harzes 100 ergeben.

4. Verfahren nach einem der Ansprüche 1 bis 3, bei dem der niedermolekulargewichtige aromatische Aminstabilisator die folgende allgemeine Formel aufweist: 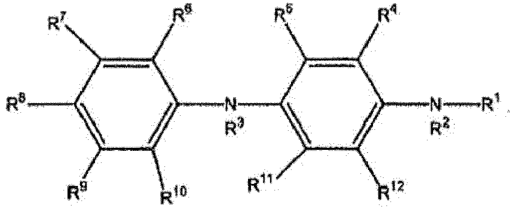 wobei R¹ eine C₁- bis C₂₀-Kohlenwasserstoffgruppe ist, und R², R³, R⁴, R⁵, R⁶, R⁷, R⁸, R⁹, R¹⁰, R¹¹ und R¹² für sich genommen H oder C₁- bis C₂₀-Kohlenwasserstoffgruppen sind.

5. Verfahren nach einem der Ansprüche 1 bis 4, bei dem der niedermolekulargewichtige aromatische Aminstabilisator ein Molekulargewicht von kleiner als oder gleich 500 g/mol aufweist.

6. Verfahren nach einem der Ansprüche 1 bis 5, bei dem der niedermolekulargewichtige aromatische Aminstabilisator ein Diaryl-p-phenylendiamin umfasst.

7. Verfahren nach einem der Ansprüche 1 bis 5, bei dem der niedermolekulargewichtige aromatische Aminstabilisator N-(1,3-Dimethylbutyl)-N'-phenyl-p-phenylendiamin umfasst.

8. Verfahren nach einem der Ansprüche 1 bis 7, bei dem das mindestens eine thermoplastische Harz mindestens ein Polyamid ausgewählt aus der Gruppe bestehend aus Nylon 6, Nylon 66, Nylon 11, Nylon 69, Nylon 12, Nylon 610, Nylon 612, Nylon 48, Nylon MXD6, Nylon 6/66 und Copolymeren davon ist.

9. Thermoplastische Elastomerzusammensetzung, die nach einem Verfahren hergestellt ist, bei dem
elastomere halogenierte Isobutylenkomponente, wobei die elastomere Komponente mit nicht mehr als 10 phr Vernetzungsmittel gemischt ist, dispergiert als Domäne in einer kontinuierlichen Phase, welche Polyamid umfasst, dynamisch vulkanisiert wird, um nachvulkanisierte dynamisch vulkanisierte Legierung herzustellen; und
die nachvulkanisierte dynamisch vulkanisierte Legierung mit 1,5 bis 10 phr niedermolekulargewichtigem aromatischem Diaminstabilisator gemischt wird, mit einem durchschnittlichen Molekulargewicht (Zahlenmittel) von weniger als 1000 g/mol, um die thermoplastische Elastomerzusammensetzung herzustellen,
wobei die Schmelzviskosität der nachvulkanisierten dynamisch vulkanisierten Legierung durch das Mischen mit dem Stabilisator reduziert wird.

## Revendications

1. Procédé pour produire une composition d'élastomère thermoplastique, comprenant les opérations consistant à :
vulcaniser dynamiquement un composant élastomère d'isobutylène dispersé sous la forme d'un domaine dans une phase continue comprenant au moins une résine thermoplastique pour produire un alliage vulcanisé dynamiquement post-vulcanisé ; et
mélanger l'alliage vulcanisé dynamiquement post-vulcanisé avec 1,5 phr ou plus d'un stabilisant de type amine aromatique de faible masse moléculaire ayant une masse moléculaire moyenne en nombre inférieure à 1000 g/mol, pour produire la composition d'élastomère thermoplastique,
dans lequel la viscosité à l'état fondu de l'alliage vulcanisé dynamiquement post-vulcanisé est réduite par le mélange avec le stabilisant.

2. Procédé selon la revendication 1, dans lequel la résistance à la traction de la composition après vieillissement conformément à la norme SAE J1960 est supérieure à la résistance à la traction de la composition déterminée avant ledit vieillissement, ou dans lequel l'allongement à la rupture de la composition après vieillissement est supérieur à l'allongement à la rupture de la composition déterminé avant ledit allongement.

3. Procédé selon la revendication 1 ou 2, dans lequel le composant élastomère d'isobutylène représente 95 à 25 parties en poids, et la résine thermoplastique représente 5 à 75 parties en poids, dans lequel le total des parties en poids du composant élastomère d'isobutylène et de la résine thermoplastique est de 100.

4. Procédé selon l'une quelconque des revendications 1 à 3, dans lequel le stabilisant de type amine de faible masse moléculaire répond à la formule générale : 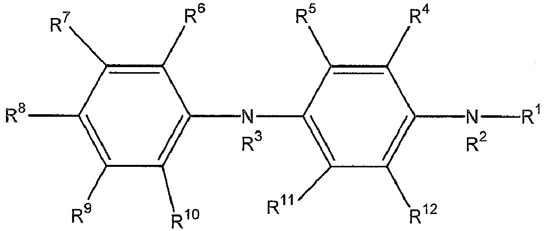 dans laquelle R₁ est un groupe hydrocarbyle en C₁ à C₂₀ et R², R³, R⁴, R⁵, R⁶, R⁷, R⁸, R⁹, R¹⁰, R¹¹ et R¹² sont individuellement H ou des groupes hydrocarbyle en C₁ à C₂₀.

5. Procédé selon l'une quelconque des revendications 1 à 4, dans lequel le stabilisant de type amine de faible masse moléculaire a une masse moléculaire inférieure ou égale à 500 g/mol.

6. Procédé selon l'une quelconque des revendications 1 à 5, dans lequel le stabilisant de type amine de faible masse moléculaire comprend une diaryl-p-phénylènediamine.

7. Procédé selon l'une quelconque des revendications 1 à 5, dans lequel le stabilisant de type amine de faible masse moléculaire comprend de la N-(1,3-diméthylbutyl)-N'-phényl-p-phénylènediamine.

8. Procédé selon l'une quelconque des revendications 1 à 7, dans lequel l'au moins une résine thermoplastique est au moins un polyamide choisi dans l'ensemble constitué par le Nylon 6, le Nylon 66, le Nylon 11, le Nylon 69, le Nylon 12, le Nylon 610, le Nylon 612, le Nylon 48, le Nylon MXD6, le Nylon 6/66 et leurs copolymères.

9. Composition d'élastomère thermoplastique préparée par un procédé comprenant les opérations consistant à :
vulcaniser dynamiquement un composant élastomère d'isobutylène halogéné, où le composant élastomère est mélangé avec au plus 10 phr d'un agent de réticulation, dispersé sous la forme d'un domaine dans une phase continue comprenant un polyamide pour produire un alliage vulcanisé dynamiquement post-vulcanisé ; et
mélanger l'alliage vulcanisé dynamiquement post-vulcanisé avec 1,5 à 10 phr d'un stabilisant de type diamine aromatique de faible masse moléculaire ayant une masse moléculaire moyenne en nombre inférieure à 1000 g/mol, pour produire la composition d'élastomère thermoplastique,
dans laquelle la viscosité à l'état fondu de l'alliage vulcanisé dynamiquement post-vulcanisé est réduite par le mélange avec le stabilisant.
